# FASCICULE DE BREVET EUROPEEN

(11) **EP 1 140 359 B1**
(45) Date de publication et mention de la délivrance du brevet: **15.03.2006**
(21) Numéro de dépôt: 99958246.3
(22) Date de dépôt: 06.12.1999
(51) Int. Cl.: B01L 3/00, G06K 7/08

(54) **PROCEDE D'ANALYSE BIOLOGIQUE COMPRENANT UN MOYEN DE CONTROLE DE L'APPARIEMENT ENTRE UN EQUIPEMENT D'ANALYSE BIOLOGIQUE ET UN RECIPIENT COMPLEMENTAIRE**
VERFAHREN ZUR BIOLOGISCHEN ANALYSE MIT EINEM MITTEL ZUM ÜBERTRAGEN VON KENNUNGSPAARUNG ZWISCHEN EINEM GERÄT UND EINEM ZUGEORDNETEN BEHÄLTER
METHOD OF BIOLOGICAL ANALYSIS COMPRISING MEANS CONTROLLING THE PAIRING BETWEEN A BIOLOGICAL ANALYSIS EQUIPMENT AND A MATCHING CONTAINER RECEPTACLE

(30) Priorité: 09.12.1998 FR 9815535
(43) Date de publication de la demande: 10.10.2001
(73) Titulaire: Central Labo Europe (S.a.r.l.), 75002 Paris (FR)
(72) Inventeur: BARA, Nicolas, F-60240 La Villetertre (FR)
(74) Mandataire: Breese, Pierre
(86) Numéro de dépôt international: PCT/FR1999/003023
(87) Numéro de publication internationale: WO 2000/033959

(56) Documents cités:
- EP-A- 0 637 750
- EP-A- 0 706 825
- EP-A- 0 875 292
- GB-A- 2 129 551

## Description

La présente invention concerne le domaine de l'analyse biologique et de diagnostic médical.

Les erreurs d'identification d'échantillons biologiques peuvent entraîner des conséquences graves. La traçabilité de l'échantillon à analyser est donc un critère essentiel pour un système d'analyse.

Pour éviter les erreurs, il est connu de marquer les supports d'échantillon avec des codes d'identification, notamment des codes à barres.

Cette solution n'est pas totalement satisfaisante. En effet, elle implique la lecture du code à barres de chaque échantillon, ce qui entraîne une perte de temps et une manipulation additionnelle. De plus, le code à barres est imprimé sur une étiquette qui peut être détériorée, rendant alors l'identification impossible.

Enfin, le code à barre ne peut contenir qu'un nombre relativement restreint d'informations et il est facilement falsifiable.

On connaît également les brevets européens EP706825, EP875292, EP637750 ou le brevet anglais GB2129551.

Ces documents de l'art antérieur divulguent des systèmes d'analyse ou des composants d'un tel système mettant en oeuvre un circuit électronique avec un émetteur sans contact, et un équipement comportant un circuit de réception et des moyens de comparaison entre les données transmises par le circuit électronique incorporé dans la pièce.

Le but de l'invention est de proposer un procédé fiable, ne nécessitant pas de manipulation additionnelle pour la lecture d'un identifiant et permettant une automatisation de la vérification, ainsi d'une identification absolue.

A cet effet, l'invention concerne un système d'analyse biologique comprenant une fonction de contrôle de l'appariement d'un équipement d'analyse biologique et d'au moins un récipient d'échantillon biologique à analyser, caractérisé en ce qu'il comprend au moins un récipient constitué par une pièce incorporant un circuit électronique comportant une mémoire et un émetteur sans contact, et au moins un équipement comprenant un circuit de réception et des moyens de comparaison entre les données transmises par le circuit électronique incorporé dans la pièce éventuellement présente dans la zone de détection, et des données concernant l'analyse, le stockage ou l'opération à réaliser.

Avantageusement, le récipient est une pièce de matière plastique moulée comportant un circuit électronique incorporé dans la masse.

De préférence, le circuit électronique incorporé dans le récipient d'échantillon à analyser est constitué par un circuit intégré, couramment nommé étiquette radio-fréquence.

Selon une variante, le circuit électronique incorporé dans le récipient d'échantillon à analyser comprend une boucle d'induction pour l'alimentation du circuit électronique.

Selon une autre variante le circuit électronique comprend en outre un récepteur destiné à la réception d'informations de personnalisation enregistrées dans la mémoire électronique.

Avantageusement, l'équipement d'analyse comprend des moyens pour interdire le fonctionnement en l'absence de détection positive de l'échantillon apparié à l'analyse, le stockage ou l'opération à réaliser.

Selon une variante, l'équipement d'analyse comprend des moyens de lecture des signaux émis par le récipient pour renseigner le résultat de l'analyse.

De préférence la zone d'identification est inférieure à 20 cm.

L'invention concerne également un récipient d'analyse apte à une utilisation dans un système d'analyse conforme à la revendication 1 caractérisé en ce qu'il est constitué par une microplaque moulée en matière plastique incorporant dans la masse un circuit comprenant un émetteur et une mémoire.

L'invention concerne encore un équipement d'analyse apte à une utilisation dans un système d'analyse conforme à la revendication 1 caractérisé en ce qu'il comprend un récepteur pour la réception des signaux émis par un récipient présent dans la zone de détection.

L'invention sera mieux comprise à la lecture de la description qui suit, concernant un exemple non limitatif de mise en oeuvre.

Le système selon un exemple de mise en oeuvre est composé de microplaques présentant des puits pour recevoir des échantillons, par exemple des échantillons délivrés par un automate. Ces microplaques sont réalisées par moulage plastique.

Pour permettre une identification à distance de chaque microplaque et interdire toute inversion ou substitution, la microplaque comporte un circuit radiofréquence formé par un circuit intégré ou hybride inclut dans la masse au moment du moulage.

Ce circuit comprend un émetteur radiofréquence associé à une mémoire dans laquelle est enregistrée une information d'identification de la microplaque. L'alimentation peut être réalisée par une pile ou préférentiellement par une bobine d'induction. Le signal émis par l'émetteur est codé pour permettre à un récepteur associé à l'équipement d'analyse de détecter et d'identifier l'information enregistrée dans la mémoire de la microplaque se trouvant dans la zone de détection. L'information peut être transmise de façon bidirectionnelle.

Cette zone de détection est limitée afin d'éviter la perturbation par d'autres microplaques se trouvant à proximité de l'équipement d'analyse. Cette limitation se fait par limitation de la puissance d'émission et éventuellement par l'utilisation d'antennes de réception directionnelles ou par tout autre procédé d'anticollision.

L'information enregistrée en mémoire peut être un identifiant unique enregistrée dans une mémoire morte au moment de la fabrication du circuit.

Elle peut également être enregistrée au moment de la première utilisation, voire à des étapes successives du traitement de l'échantillon, pour assurer la traçabilité de tests successifs par exemple. Dans ce cas, le circuit électronique comporte en outre un récepteur associé à des moyens d'enregistrement dans le récepteur des informations transmises par un équipement complémentaire.

L'activation de l'émission peut être réalisée par un circuit de détection d'une variation de champs électromagnétique, par exemple par la détection de la variation du signal électrique fourni par la bobine d'induction. La variation de ce signal déclenche l'émission d'un signal codé par les informations enregistrées en mémoire. Cette émission peut être renouvelée périodiquement, tant que le signal électrique fourni par la boucle d'induction reste supérieur à une valeur-seuil.

L'activation peut également être réalisée par l'émission d'un signal d'activation par un émetteur prévue sur l'équipement d'analyse. Dans ce cas, le circuit électronique du récipient doit comporter un récepteur pour la détection du signal d'activation.

## Revendications

1. Procédé de contrôle de l'appariement entre un équipement d'analyse biologique et un récipient d'échantillon biologique à analyser, ledit récipient étant constitué par une pièce incorporant un circuit électronique comportant une mémoire et un émetteur sans contact et l'équipement d'analyse biologique comprenant un circuit de réception et des moyens de comparaison entre les données transmises par le circuit électronique incorporé dans la pièce **caractérisé en ce qu'**il comprend les étapes suivantes :
- Emission par l'émetteur d'un signal permettant au circuit de réception de détecter et d'identifier les données enregistrées dans la mémoire.
- Comparer les données transmises avec des données concernant l'analyse, le stockage ou l'opération à réaliser,
- Interdire le fonctionnement en l'absence de détection positive de l'échantillon apparié à l'analyse.

2. Procédé de contrôle de l'appariement entre un équipement d'analyse biologique et un récipient d'échantillon biologique à analyser selon la revendication 1 **caractérisé en ce que** le récipient est une pièce de matière plastique moulée comportant un circuit électronique incorporé dans la masse.

3. Procédé de contrôle de l'appariement entre un équipement d'analyse biologique et un récipient d'échantillon biologique à analyser selon la revendication 1 ou 2 **caractérisé en ce que** le circuit électronique incorporé dans le récipient d'échantillon à analyser est constitué par un circuit intégré.

4. Procédé de contrôle de l'appariement entre un équipement d'analyse biologique et un récipient d'échantillon biologique à analyser selon la revendication 1 ou 2 **caractérisé en ce que** le circuit électronique incorporé dans le récipient d'échantillon à analyser comprend une boucle d'induction pour l'alimentation du circuit électronique.

5. Procédé de contrôle de l'appariement entre un équipement d'analyse biologique et un récipient d'échantillon biologique à analyser selon la revendication 1 ou 2 **caractérisé en ce que** le circuit électronique comprend en outre un récepteur destiné à la réception d'informations de personnalisation enregistrées dans la mémoire électronique.

6. Procédé de contrôle de l'appariement entre un équipement d'analyse biologique et un récipient d'échantillon biologique à analyser selon la revendication 1 ou 2 **caractérisé en ce que** l'équipement d'analyse comprend des moyens de lecture des signaux émis par le récipient pour renseigner le résultat de l'analyse.

## Patentansprüche

1. Prüfverfahren der Paarung zwischen einem biologischen Analysegerät und einem Behälter einer zu analysierenden biologischen Probe, wobei der Behälter aus einem Teil besteht, das einen elektronischen Schaltkreis mit einem Speicher und einem kontaktlosen Sender umfasst und das biologische Analysegerät einen Empfangsschaltkreis und Vergleichsmittel zwischen den von dem in dem Teil eingebetteten elektronischen Schaltkreis übertragenen Daten aufweist, **dadurch gekennzeichnet, dass** es die folgenden Schritte umfasst:
- Sendung eines Signals durch den Sender, das es dem Empfangsschaltkreis ermöglicht, die im Speicher registrierten Daten zu erfassen und zu identifizieren ;
- Vergleich der übertragenen Daten mit die Analyse, die Lagerung oder die durchzuführende Operation betreffenden Daten ;
- Untersagung der Funktion bei Abwesenheit einer positiven Erfassung der mit der Analyse gepaarten Probe.

2. Prüfverfahren der Paarung zwischen einem biologischen Analysegerät und einem Behälter einer zu analysierenden biologischen Probe gemäß Anspruch 1, **dadurch gekennzeichnet, dass** der Behälter ein Formkunststoffteil mit einem in der Masse eingebetteten elektronischer Schaltkreis ist.

3. Prüfverfahren der Paarung zwischen einem biologischen Analysegerät und einem Behälter einer zu analysierenden biologischen Probe gemäß Anspruch 1 oder 2, **dadurch gekennzeichnet, dass** der in dem Behälter der zu analysierenden Probe eingebettete elektronische Schaltkreis aus einem integrierten Schaltkreis besteht.

4. Prüfverfahren der Paarung zwischen einem biologischen Analysegerät und einem Behälter einer zu analysierenden biologischen Probe gemäß Anspruch 1 oder 2, **dadurch gekennzeichnet, dass** der in dem Behälter der zu analysierenden Probe eingebettete Schaltkreis eine Induktionsschleife für die Versorgung des elektronischen Schaltkreises umfasst.

5. Prüfverfahren der Paarung zwischen einem biologischen Analysegerät und einem Behälter einer zu analysierenden biologischen Probe gemäß Anspruch 1 oder 2, **dadurch gekennzeichnet, dass** der elektronische Schaltkreis ferner einen Empfänger umfasst für den Empfang von in dem elektronischen Speicher registrierten Personalisierungsdaten.

6. Prüfverfahren der Paarung zwischen einem biologischen Analysegerät und einem Behälter einer zu analysierenden biologischen Probe gemäß Anspruch 1 oder 2, **dadurch gekennzeichnet, dass** das Analysegerät Lesemittel der von dem Behälter gesendeten Signale umfasst, um Aussagen zum Ergebnis der Analyse zu erhalten.

## Claims

1. A method of checking matching between biological analysis equipment and a receptacle for a biological sample to be analyzed, said receptacle being constituted by a part incorporating an electronic circuit having a memory and a contactless transmitter, and the biological analysis equipment having a receiver circuit and means for comparing items of data transmitted by the electronic circuit incorporated in the part, said method being **characterized in that** it comprises the following steps:
- causing the transmitter to transmit a signal enabling the receiver circuit to detect and to identify the items of data recorded in the memory;
- comparing the transmitted data with data concerning the analysis, the storage, or the operation to be performed; and
- disabling operation in the absence of positive detection of the sample matched to the analysis.

2. A method of checking matching between biological analysis equipment and a receptacle for a biological sample to be analyzed according to claim 1, **characterized in that** the receptacle is a part made of a molded plastics material having an electronic circuit incorporated in its thickness.

3. A method of checking matching between biological analysis equipment and a receptacle for a biological sample to be analyzed according to claim 1 or claim 2, **characterized in that** the electronic circuit incorporated in the receptacle for the sample to be analyzed is constituted by an integrated circuit.

4. A method of checking matching between biological analysis equipment and a receptacle for a biological sample to be analyzed according to claim 1 or claim 2, **characterized in that** the electronic circuit incorporated in the receptacle for the sample to be analyzed includes an induction loop for powering the electronic circuit.

5. A method of checking matching between biological analysis equipment and a receptacle for a biological sample to be analyzed according to claim 1 or claim 2, **characterized in that** the electronic circuit further includes a receiver for receiving personalization information recorded in the electronic memory.

6. A method of checking matching between biological analysis equipment and a receptacle for a biological sample to be analyzed according to claim 1 or 2, **characterized in that** the analysis equipment includes means for reading signals transmitted by the receptacle for the purpose of indicating the result the of the analysis.
